# EUROPÄISCHE PATENTSCHRIFT

(11) **EP 1 447 592 B1**
(45) Veröffentlichungstag und Bekanntmachung des Hinweises auf die Patenterteilung: **26.07.2006**
(21) Anmeldenummer: 04000262.8
(22) Anmeldetag: 08.01.2004
(51) Int. Cl.: F16F 15/08, F04D 29/66

(54) **Verbindung zwischen einem tragenden Element und einem getragenen Element**
Connection between a supporting element and a supported element
Connexion entre un élément porteur et un élément porté

(30) Priorität: 12.02.2003 DE 10305942
(43) Veröffentlichungstag der Anmeldung: 18.08.2004
(73) Patentinhaber: Behr GmbH & Co. KG, 70469 Stuttgart (DE)
(72) Erfinder: Bacher, Christof, 71254 Ditzingen (DE); Bitzer, Markus, 71691 Freiberg a.N. (DE); Knöppel, Klaus-Dieter, 71640 Ludwigsburg (DE)
(74) Vertreter: Grauel, Andreas

(56) Entgegenhaltungen:
- DE-A- 19 651 735
- US-A- 5 030 068
- US-A- 5 133 617
- US-A- 5 449 153
- US-A- 6 112 848

## Beschreibung

Die Erfindung betrifft einen Anordnung zwischen einem tragenden Element und einem getragenen Element, insbesondere für eine Gebläselagerung bei einem Kraftfahrzeug, gemäß dem Oberbegriff des Anspruchs 1.

Herkömmliche Verbindungen, insbesondere zur Positionierung des Lüfterrades mit Motor an einem Gehäuseteil oder einem Gebläse in einer Gehäusespirale, weisen üblicherweise Elemente auf Basis eines thermoplastischen Elastomers auf (siehe DE-A-196 51 735). Systeme auf Silikonbasis sind bislang zu teuer, insbesondere da aufwendige Verbindungsverfahren angewandt werden müssen.

Es ist Aufgabe der Erfindung, eine verbesserte und kostengünstige Anordnung zur Verfügung zu stellen.

Diese Aufgabe wird gelöst durch eine Anordnung mit den Merkmalen des Anspruchs 1. Vorteilhafte Ausgestaltungen sind Gegenstand der Unteransprüche.

Erfindungsgemäß ist eine Verbindung zwischen einem tragenden Element, insbesondere einer Motorhalterung, und einem getragenen Element, insbesondere einem Kraftfahrzeug-Gebläse, vorzugsweise dem Lüfterrad mit Motor, angeordnet. Hierbei ist zwischen dem tragenden Element und dem getragenen Element ein elastisches Hohlprofil angeordnet, wobei ein Vorsprung vorgesehen ist, der im Falle einer Belastung eine Verformung des elastischen Hohlprofils bewirkt. Der Vorsprung ist in Richtung der Relativbewegung des getragenen Elements zum tragenden Element ausgerichtet. Die Verbindung wirkt bevorzugt insbesondere schwingungsisolierend, d.h. sie lässt vorzugsweise eine Schwingungsbewegung zu, wobei gegebenenfalls auch eine, wenn auch geringe, Dämpfung erfolgt.

Vorzugsweise wird der Vorsprung durch einen Steg gebildet, der bevorzugt über die gesamte Länge des Hohlprofils läuft. Dies stellt eine gleichmäßige Belastung des Hohlprofils sicher.

Bevorzugt ist der Vorsprung an einem der beiden Elemente, insbesondere am getragenen Element, vorgesehen, er kann jedoch auch direkt am Hohlprofil vorgesehen sein. Dabei kann der Vorsprung einstückig mit einem der Elemente ausgebildet sein oder aber nachträglich angebracht werden.

Vorzugsweise ist der Vorsprung buckelförmig ausgebildet. Diese Form belastet das Hohlprofil auf Grund der Abrundung an der Spitze nur gering, so dass eine lange Lebensdauer möglich ist. Hierbei kommt beim Einfedern mehr Fläche zur Anlage, so dass die Federkennlinie des eingebauten Hohlprofils progressiv verläuft.

Die Belastung des Hohlprofils ist minimal, wenn der Vorsprung bezüglich einer Fläche einer Aufnahme eines der Elemente mittig angeordnet ist. Die mittige Anordnung bewirkt eine geringere Steifigkeit. Auch dies senkt die Belastung des Hohlprofils und erhöht dadurch die Lebensdauer.

Vorzugsweise besteht das Hohlprofil aus Silikon, jedoch sind prinzipiell beliebige andere Materialien mit geeigneten Eigenschaften möglich. Silikon hat ein sehr gutes Setzungsverhalten und die Abhängigkeit der Steifigkeit von der Temperatur ist gering.

Bevorzugt ist das Hohlprofil im eingebauten, unbelasteten Zustand auf Grund des Vorsprungs leicht vorverformt.

Das Hohlprofil ist bevorzugt als Rechteck-Hohlprofil ausgebildet, wobei auch der Hohlraum im wesentlichen rechteckförmig ist. Eine derartige Form ist einfach herzustellen und bietet auf Grund der in der Beschreibung näher erläuterten Funktion eine progressive Steifigkeit, die mit zunehmender Verformung des Hohlprofils zunimmt. Hierbei ist die Steifigkeit zu Beginn recht gering.

Bevorzugt wird das Hohlprofil in Aufnahmen in den beiden Elementen mittels Form- und/oder Kraftschluss gehalten. Dies erhöht die Vielfalt der für das Hohlprofil verwendbaren Materialien, da beispielsweise keine spezielle Eignung in Hinblick auf Verkleben oder in Hinblick auf Rissbildung erforderlich ist. Somit können auch billigere Silikonmaterialien verwendet werden.

Zur Verhinderung einer Überlastung des Hohlprofils und zur Begrenzung der Bewegungsfreiheit, beispielsweise eines Gebläses, sind an beiden Elementen Anschlagflächen vorgesehen, die in Anlage aneinander gelangen, wenn die Belastung zu groß wird.

Bevorzugt ist zur Verhinderung einer seitlichen Verschiebung und Erhöhung der Progression des diesbezüglichen Kraftverlaufs ein seitlich am Hohlprofil, vorzugsweise bis zum Ende des Hohlprofils oder etwas darüber hinaus vorbeiragender und relativ zum Hohlprofil beweglicher erster Rand vorgesehen, der bei einer ersten seitlichen Verschiebung in Anlage an das Hohlprofil gelangt. Bei einer weiteren Verschiebung erhöht sich der Kraftaufwand bis der erste Rand seitlich an der unteren in seitlicher Richtung Seite des Hohlprofils anliegt. Ab der seitlichen Anlage an der unteren Seite des Hohlprofils steigt der Kraftaufwand zum Verschieben deutlich an.

Vorzugsweise ist auf der anderen Seite des Hohlprofils, die dem Rand gegenüberliegt, eine Anschlagfläche, vorzugsweise für einen zweiten Rand, vorgesehen, die eine Überlastung des Hohlprofils in Folge einer seitlichen Verschiebung der beiden relativ zueinander beweglichen Elemente verhindert und den seitlichen Bewegungsraum begrenzt.

Im Folgenden wird die Erfindung anhand zweier Ausführungsbeispiele unter Bezugnahme auf die Zeichnung im Einzelnen erläutert. Es zeigen:
- Fig. 1: einen Schnitt durch ein erstes Ausführungsbeispiel, und
- Fig. 2: einen Schnitt durch ein zweites Ausführungsbeispiel.

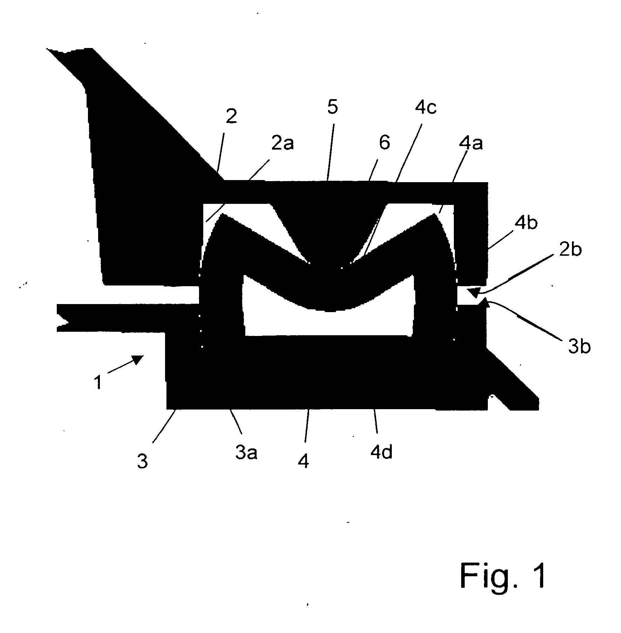

Fig. 1 zeigt einen Schnitt durch eine Anordnung 1, welche ein getragenes Element 2 mit einem tragenden Element 3 schwingungsisolierend und leicht dämpfend verbindet. Die Anordnung 1 wird durch ein rechteckförmiges Hohlprofil 4 aus Silikon gebildet. Hierbei ist sowohl im getragenen Element 2 als auch im tragenden Element 3 je eine Aufnahme 2a bzw. 3a vorgesehen. Die Aufnahmen 2a und 3a haben einen im wesentlichen dem Hohlprofil 4, soweit dieses in der entsprechenden Aufnahme 2a bzw. 3a aufgenommen ist, entsprechenden Querschnitt. Das rechteckförmige Hohlprofil 4 ist in den beiden Aufnahmen 2a und 3a jeweils annähernd zur Hälfte aufgenommen, wobei - zumindest im entlasteten Zustand - ein ausreichend großer Spalt zwischen dem getragenen Element 2 und dem tragenden Element 3 vorgesehen ist. Das Hohlprofil 4 wird in den Aufnahmen 2a und 3a beispielsweise mittels Formschluss und/oder Kraftschluss gehalten.

Wie aus Fig. 1 entnommen werden kann, ist vorliegend mittig in der Aufnahme 2a des getragenen Elements 2 ein buckelförmiger Vorsprung 5 angeordnet, wobei es sich um einen Steg 6 handelt. Dabei ist die Höhe des buckelförmigen Vorsprungs 5 etwas kleiner als die Tiefe der Aufnahme 2a. Dieser Vorsprung 5 bewirkt eine Vorverformung des Hohlprofils 4, so dass die vorliegend oberen Ecken 4a des Hohlprofils nicht in den entsprechenden Ecken der Aufnahme 2a angeordnet sind.

Im Falle einer Belastung erfolgt zuerst eine weitergehende, biegende Verformung des Hohlprofils 4 auf Grund des Vorsprungs 5. Gelangen auf Grund weiterer Erhöhung der Belastung und damit verbundener fortscheitender Verformung die Ecken 4a des Hohlprofils 4 in Anlage an die Aufnahme 2a, wird die Belastung direkt als Druckkraft von den beiden Seiten 4b des Hohlprofils 4 übertragen. Bei weiterer Erhöhung der Belastung wird das Hohlprofil derart zusammengepresst, dass der tiefste Punkt der Oberseite 4c in Anlage an die Unterseite 4d des Hohlprofils 4 gelangt. Bei weiterer Erhöhung der Belastung wird dieselbe direkt über parallel zueinander angeordnete Anschlagflächen 2b und 3b vom getragenen Element 2 an das tragende Element 3 übertragen, wodurch gleichzeitig auch der maximale Weg einer Bewegung des getragenen Elements 2 auf das tragende Element 3 zu begrenzt wird, und dadurch sichergestellt wird, dass das Lüfterrad nicht an der Gebläsespirale streift. Dabei sind die Abmessungen und die Steifigkeit des Hohlprofils 4 derart gewählt, dass in einem normalen Betrieb keine Anlage der Anschlagflächen 2b, 3b aneinander erfolgt. Durch den Wechsel der Art der Belastungsübertragung erfolgt eine Veränderung der Progressivität der Steifigkeit der Verbindung 1.

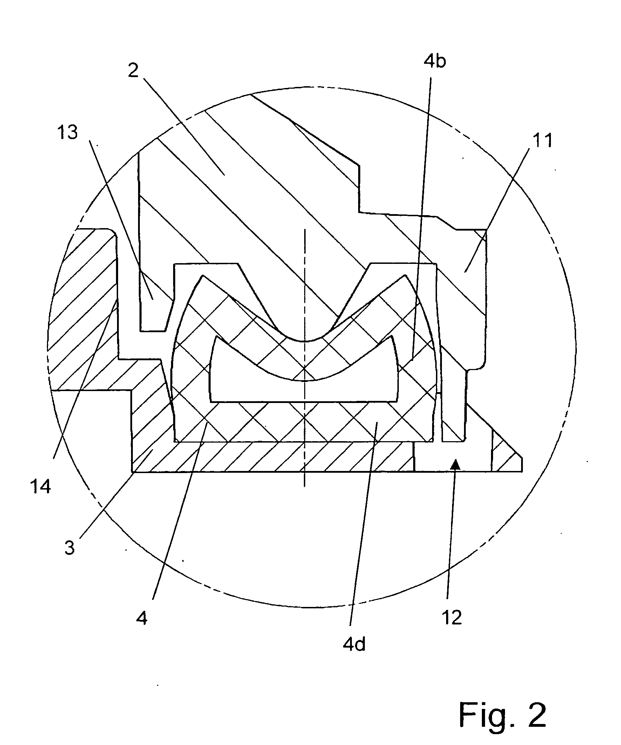

Gemäß dem in Fig. 2 dargestellten zweiten Ausführungsbeispiel ist am vorsprungsseitigen Element, d.h. vorliegend am getragenen Element 2, ein formstabiler Rand 11 ausgebildet, der im Folgenden als erster Rand 11 bezeichnet wird, der sich bis zur Ebene der Grundfläche des Hohlprofils 4 erstreckt. Um einen ausreichenden vertikalen Spielraum zu gewährleisten ist im tragenden Element 3 eine Aussparung 12 vorgesehen, in die der erste Rand 11 ragt. Der erste Rand 11 ist hierbei derart ausgebildet, dass er Schwingungen nicht durch ein Anschlagen an der Aussparung 12 behindert.

Im Falle einer horizontalen Verschiebung der beiden Elemente 2 und 3 gegeneinander gelangt nach einer freien Strecke (Stufe 1) zuerst der erste Rand 11 in Anlage an einen in Folge der vertikalen Verformung leicht gewölbten Bereich der in Fig. 2 rechts dargestellten Seite 4b des Hohlprofils 4, so dass sich der Widerstand gegen eine seitliche Verschiebung beständig leicht erhöht (Stufe 2).

Gelangt der erste Rand 11 auch im Bereich der unteren Seite 4d seitlich in Anlage an das Hohlprofil 4 (Stufe 3), so erhöht sich der Kraftaufwand deutlich, wobei eine seitliche Verschiebung nur bis zu einem Anschlagen eines zweiten Randes 13 des Elements 2 an einer am anderen Element 3 ausgebildeten Anschlagfläche 14 möglich ist (Stufe 4). Hierbei lässt sich durch die Länge des ersten Randes 11 die Progression bei der dritten Stufe in gewissen Grenzen ändern, so dass eine bedarfsgerechte Wahl der Progression des Kraftaufwands in Hinblick auf eine seitliche Verschiebung möglich ist.

Um einen ausreichenden Abstand zum Hohlprofil 4 zu gewährleisten, sind die einander gegenüberliegenden Seiten der Elemente 2 und 3 mit einer Art Fase versehen, wie in Fig. 2 links dargestellt.

### Bezugszeichenliste

- 1: Anordnung
- 2: getragenes Element
- 2a: Aufnahme
- 2b: Anschlagfläche
- 3: tragendes Element
- 3a: Aufnahme
- 3b: Anschlagfläche
- 4: Hohlprofil
- 4a: Ecke
- 4b: Seite
- 4c: Oberseite
- 4d: Unterseite
- 5: Vorsprung
- 6: Steg
- 11: erster Rand
- 12: Aussparung
- 13: zweiter Rand
- 14: Anschlagfläche
P1, P2, P3

## Patentansprüche

1. Anordnung eines tragenden Elements (3) und eines getragenen Elements (2), **dadurch gekennzeichnet, dass** zwischen dem tragenden Element (3) und dem getragenen Element (2) ein elastisches Hohlprofil (4) angeordnet ist, und ein Vorsprung (5) vorgesehen ist, der im Falle einer Belastung eine Verformung des elastischen Hohlprofils (4) bewirkt.

2. Anordnung nach Anspruch 1, **dadurch gekennzeichnet, dass** der Vorsprung (5) durch einen Steg (6) gebildet ist.

3. Anordnung nach Anspruch 1 oder 2, **dadurch gekennzeichnet, dass** der Vorsprung (5) an einem der beiden Elemente (2; 3) vorgesehen ist.

4. Anordnung nach einem der vorhergehenden Ansprüche, **dadurch gekennzeichnet, dass** der Vorsprung (5) bucketförmig ausgebildet ist.

5. Anordnung nach einem der vorhergehenden Ansprüche, **dadurch gekennzeichnet, dass** der Vorsprung (5) bezüglich einer Fläche mittig angeordnet ist.

6. Anordnung nach einem der vorhergehenden Ansprüche, **dadurch gekennzeichnet, dass** das Hohlprofil (4) ein Silikonprofil ist.

7. Anordnung nach einem der vorhergehenden Ansprüche, **dadurch gekennzeichnet, dass** das Hohlprofil (4) im eingebauten, unbelasteten Zustand auf Grund des Vorsprungs (5) leicht vorverformt ist.

8. Anordnung nach einem der vorhergehenden Ansprüche, **dadurch gekennzeichnet, dass** das Hohlprofil (4) ein Rechteck-Hohlprofil ist.

9. Anordnung nach einem der vorhergehenden Ansprüche, **dadurch gekennzeichnet, dass** das Hohlprofil (4) in Aufnahmen (2a; 3a) in den beiden Elementen (2; 3) mittels Formschluss gehalten ist.

10. Anordnung nach einem der vorhergehenden Ansprüche, **dadurch gekennzeichnet, dass** das Hohlprofil in Aufnahmen (2a; 3a) in den beiden Elementen (2; 3) mittels Kraftschluss gehalten ist.

11. Anordnung nach einem der vorhergehenden Ansprüche, **dadurch gekennzeichnet, dass** der Vorsprung (5) am getragenen Element (2) angeordnet ist.

12. Anordnung nach einem der vorhergehenden Ansprüche, **dadurch gekennzeichnet, dass** Anschlagflächen an beiden Elementen (2; 3) vorgesehen sind.

13. Anordnung nach einem der vorhergehenden Ansprüche, **dadurch gekennzeichnet, dass** ein seitlich vom Hohlprofil (4) angeordneter erster Rand (11) vorgesehen ist, der bei einer seitlichen Verschiebung des Hohlprofils (4) in Anlage an das Hohlprofil (4) gelangt und/oder ein größerer Bereich desselben in Anlage an das Hohlprofil (4) gelangt.

14. Anordnung nach Anspruch 13, **dadurch gekennzeichnet, dass** auf der dem ersten Rand (11) gegenüberliegenden Seite eine seitliche Anschlagfläche (14) vorgesehen ist, die eine übermäßige seitliche Verschiebung der beiden Elemente (2 und 3) gegeneinander verhindert.

15. Anordnung nach einem der vorhergehenden Ansprüche, **dadurch gekennzeichnet, dass** die Anordnung (1) schwingungsisolierend ist.

16. Verwendung einer Anordnung (1) gemäß einem der Ansprüche 1 bis 15 für die Entkoppelung einer Lagerung zwischen einem Kraftfahrzeug-Gebläse und dessen Halterung.

17. Verwendung nach Anspruch 16, **dadurch gekennzeichnet, dass** die Anordnung für die Entkoppelung zwischen einem Lüfterrad mit Motor und dessen Motorhalterung angeordnet ist.

## Claims

1. An arrangement of a supporting element (3) and a supported element (3),
**characterised in that**
an elastic hollow section (4) is positioned between the supporting element (3) and the supported element (2) and a projection (5) is provided which effects a deformation of the elastic hollow section (4) in the event of a load.

2. An arrangement in accordance with claim 1,
**characterised in that**
the projection (5) is formed by a web (6).

3. An arrangement in accordance with claim 1 or 2,
**characterised in that**
the projection (5) is provided on one of the two elements (2; 3).

4. An arrangement in accordance with one of the preceding claims,
**characterised in that**
the projection (5) is designed in the shape of a hump.

5. An arrangement in accordance with one of the preceding claims,
**characterised in that**
the projection (5) is positioned in the centre of a surface.

6. An arrangement in accordance with one of the preceding claims,
**characterised in that**
the hollow section (4) is a silicon section.

7. An arrangement in accordance with one of the preceding claims,
**characterised in that**
in its fitted, unloaded state the hollow section (4) is slightly pre-deformed due to the projection (5).

8. An arrangement in accordance with one of the preceding claims,
**characterised in that**
the hollow section (4) is a rectangular hollow section.

9. An arrangement in accordance with one of the preceding claims,
**characterised in that**
the hollow section (4) is held positively in receivers (2a; 3a) in the two elements (2; 3).

10. An arrangement in accordance with one of the preceding claims,
**characterised in that**
the hollow section (4) is held non-positively in receivers (2a; 3a) in the two elements (2; 3).

11. An arrangement in accordance with one of the preceding claims,
**characterised in that**
the projection (5) is positioned on the supported element (2).

12. An arrangement in accordance with one of the preceding claims,
**characterised in that**
stopping faces are provided on both elements (2; 3).

13. An arrangement in accordance with one of the preceding claims,
**characterised in that**
a first edge (11) positioned to the side of the hollow section (4) is provided and all and/or a large part of it comes into contact with the hollow section (4) when the hollow section (4) is moved laterally.

14. An arrangement in accordance with claim 13,
**characterised in that**
provided on the side opposite the first edge (11) is a lateral stopping face (14) which prevents any excessive lateral movement of the two elements (2 and 3) in relation to one another.

15. An arrangement in accordance with one of the preceding claims,
**characterised in that**
the arrangement (1) provides vibration damping.

16. A use of an arrangement (1) in accordance with one of claims 1 to 15 for decoupling an arrangement of bearings between a motor vehicle fan and its mounting.

17. A use in accordance with claim 16,
**characterised in that**
the arrangement for decoupling is positioned between a fan wheel with a motor and its motor mounting.

## Revendications

1. Agencement d'un élément porteur (3) et d'un élément porté (2),
**caractérisé en ce qu'**un profilé creux (4) élastique est disposé entre l'élément porteur (3) et l'élément porté (2), et il est prévu une partie saillante (5) qui, dans le cas d'une contrainte, provoque une déformation du profilé creux (4) élastique.

2. Agencement selon la revendication 1, **caractérisé en ce que** la partie saillante (5) est formée par une partie pleine (6).

3. Agencement selon la revendication 1 ou 2, **caractérisé en ce que** la partie saillante (5) est prévue au niveau de l'un des deux éléments (2 ; 3).

4. Agencement selon l'une quelconque des revendications précédentes, **caractérisé en ce que** la partie saillante (5) est configurée en forme de bosse.

5. Agencement selon l'une quelconque des revendications précédentes, **caractérisé en ce que** la partie saillante (5) est disposée au milieu par rapport à une surface.

6. Agencement selon l'une quelconque des revendications précédentes, **caractérisé en ce que** le profilé creux (4) est un profilé en silicone.

7. Dispositif selon l'une quelconque des revendications précédentes, **caractérisé en ce que** le profilé creux (4), à l'état monté, non sollicité, est légèrement prédéformé en raison de la partie saillante (5).

8. Agencement selon l'une quelconque des revendications précédentes, **caractérisé en ce que** le profilé creux (4) est un profilé creux rectangulaire.

9. Agencement selon l'une quelconque des revendications précédentes, **caractérisé en ce que** le profilé creux (4) est tenu, par sûreté de forme, dans des logements (2a ; 3a) formés dans les deux éléments (2 ; 3).

10. Agencement selon l'une quelconque des revendications précédentes, **caractérisé en ce que** le profilé creux est tenu, par action de force, dans des logements (2a ; 3a) formés dans les deux éléments (2 ; 3).

11. Agencement selon l'une quelconque des revendications précédentes, **caractérisé en ce que** la partie saillante (5) est disposée sur l'élément porté (2).

12. Agencement selon l'une quelconque des revendications précédentes, **caractérisé en ce que** des surfaces de butée sont prévues sur les deux éléments (2 ; 3).

13. Agencement selon l'une quelconque des revendications précédentes, **caractérisé en ce qu'**il est prévu un premier bord (11) disposé latéralement par rapport au profilé creux (4), bord qui, dans le cas d'un déplacement latéral du profilé creux (4), vient en appui sur le profilé creux (4) et/ou une plus grande zone de ce même bord vient en appui sur le profilé creux (4).

14. Agencement selon la revendication 13, **caractérisé en ce qu'**il est prévu, sur le côté placé à l'opposé du premier bord (11), une surface de butée latérale (14) qui empêche un déplacement latéral excessif des deux éléments (2 et 3), l'un par rapport à l'autre.

15. Agencement selon l'une quelconque des revendications précédentes, **caractérisé en ce que** l'agencement (1) est isolant des vibrations.

16. Utilisation d'un agencement (1) selon l'une quelconque des revendications 1 à 15, pour le découplage d'une suspension entre un ventilateur de véhicule et sa fixation.

17. Utilisation selon la revendication 16, **caractérisée en ce que** l'agencement pour le découplage est disposé entre une roue de ventilateur à moteur et sa fixation sur le moteur.
